# FASCICULE DE BREVET EUROPEEN

(11) **EP 1 619 078 B1**
(45) Date de publication et mention de la délivrance du brevet: **11.07.2007**
(21) Numéro de dépôt: 05106640.5
(22) Date de dépôt: 20.07.2005
(51) Int. Cl.: B60R 5/04

(54) **DIspositif cache-bagages pour véhicule automobile, et véhicule correspondant.**
Rollo für Laderaumabdeckung für ein Kraftfahrzeug und hiermit ausgestattetes Fahrzeug
Vehicle boot cover and vehicle equipped therewith

(30) Priorité: 20.07.2004 FR 0408054
(43) Date de publication de la demande: 25.01.2006
(73) Titulaire: WAGON SAS, 79302 Bressuire Cédex (FR)
(72) Inventeur: Jolivet, David, 79300, Bressuire (FR)
(74) Mandataire: Bioret, Ludovic

(56) Documents cités:
- DE-U- 20 019 704
- FR-A- 1 508 091
- FR-A- 2 658 767
- US-A- 4 222 600

## Description

Le domaine de l'invention est celui des véhicules automobiles, et notamment des véhicules présentant un hayon ainsi que les véhicules de type « monospace » ou « break », ayant un hayon arrière articulé par exemple au voisinage du pavillon du véhicule. Elle peut également s'appliquer par exemple aux véhicules de type « pick-up ».

Ces véhicules présentent un espace destiné à recevoir des bagages (on englobe bien sûr sous ce terme les bagages au sens strict, mais également tout colis, objet, produit, ... susceptible d'être transporté dans un véhicule). Cet espace est généralement défini par le dossier de la banquette arrière du véhicule, les bords latéraux du véhicule et le hayon, ou la portière, en position fermée.

Depuis longtemps, on recouvre cet espace par une tablette amovible, qui permet notamment de cacher le contenu de cet espace de stockage de bagages. On a également proposé des toiles (ou rideaux) cache-bagages, montées sur un tube à enrouleur, et que l'on peut déployer au-dessus de cet espace. L'invention concerne plus précisément ces dispositifs cache-bagages.

Une telle approche est décrite dans le brevet FR 2 866 293 déposé au nom de la demanderesse.

Selon les techniques de l'art antérieur, de telles toiles d'occultation présentent une barre de tirage dont les extrémités sont équipées de patins guidés en coulissement par des rails latéraux montés sur le véhicule automobile, les patins étant solidarisés à des câbles d'entraînement coulissant à l'intérieur des rails latéraux.

Cette approche est relativement efficace, et esthétique. Cependant, elle présente des inconvénients. En effet, selon ces techniques de l'art antérieur, le constructeur doit assurer le montage et le réglage des câbles d'entraînement du dispositif cache-bagages à l'intérieur des rails de façon à assurer notamment la tension du rideau d'occultation en position déployée et à assurer un coulissement symétrique des câbles d'entraînement. Ceci a notamment pour conséquences, un temps de montage important, ainsi qu'un coût relativement élevé.

Un autre inconvénient de ces techniques de l'art antérieur correspond au fait que le rideau d'occultation étant sensiblement horizontal dans sa position déployée, celui-ci risque de ne pas présenter un maintien suffisant et, en conséquence, de « pôcher », notamment si le rideau d'occultation ne présente pas de baleines de renfort.

La mis en oeuvre de telles baleines est relativement complexe, et suppose un emplacement important pour leur rangement, lorsque le store est replié.

En outre, un tel rideau d'occultation ne présentera pas, a fortiori, un maintien suffisant pour qu'il soit possible de poser sur celui-ci un vêtement par exemple sans qu'il ne s'affaisse.

L'invention a notamment pour objectif de pallier ces inconvénients de l'art antérieur.

Plus précisément, un objectif de l'invention est de fournir un dispositif cache-bagages à rideau d'occultation mobile pour véhicule dont les coûts de montage et de réglage soient fortement réduits.

Un autre objectif de l'invention est de mettre en oeuvre un dispositif cache-bagages qui soit simple et rapide à monter sur le véhicule automobile, pour le constructeur, mais également pour les techniciens chargés de la maintenance et des éventuelles réparations du dispositif.

L'invention a encore pour objectif de proposer un dispositif différent de ceux connus dans l'art antérieur et présentant un maintien et une tenue satisfaisants en position déployée, de façon à ne pas pôcher.

Ces objectifs, ainsi que d'autres qui apparaîtront par la suite, sont atteints à l'aide d'un dispositif cache-bagages pour véhicule automobile, comprenant un tube d'enroulement monté sur un bâti, et une toile d'occultation dont une première extrémité est solidaire dudit tube d'enroulement et une seconde extrémité est solidaire d'une barre de tirage.

Selon l'invention, un tel dispositif comprend une seconde toile, entraînée par la barre de tirage et se déployant parallèlement à la première toile d'occultation et simultanément à celle-ci, et des moyens d'actionnement se déployant entre la première toile d'occultation et la seconde toile, les moyens d'actionnement étant montés pivotants sur le bâti et agissant sur la barre de tirage de façon à faire passer cette dernière d'une position de rangement, dans laquelle elle est ramenée au voisinage du tube d'enroulement, à une position déployée, dans laquelle elle assure le déploiement de la toile d'occultation, et inversement, et définissant, dans la position déployée, au moins une partie d'une structure de maintien des toiles d'occultation dans un plan sensiblement horizontal.

Ainsi, l'invention repose sur une approche tout à fait nouvelle et inventive permettant la réalisation d'un cache-bagages pour véhicule automobile ne nécessitant pas de modification importante du véhicule par le constructeur, et présentant un maintien satisfaisant en position déployée.

Un véhicule peut donc être équipé d'un tel dispositif facilement et à moindre coût après sa fabrication, le dispositif étant en outre simple à monter et ne nécessitant pas de réglage particulier.

La présence de la seconde toile assure simultanément la protection des moyens d'actionnement, ainsi que celle des bagages, éventuellement présents dans l'espace arrière du véhicule occulté par le cache-bagages. Elle protège également l'utilisateur en évitant que celui-ci ne se blesse, par exemple par pincement, avec les moyens d'actionnement.

De façon préférée, les moyens d'actionnement portent au moins une traverse de renfort de la structure de maintien.

Avantageusement, la ou les traverses sont parallèles à l'axe du tube d'enroulement, et déplacées par les moyens d'actionnement lors du déploiement ou du repliement de la toile d'occultation.

Ainsi, la structure de maintien de la toile d'occultation, définie partiellement par les moyens d'actionnement est renforcée par à la présence d'une ou plusieurs traverses.

De façon avantageuse, les extrémités de la ou des traverses et/ou de la barre de tirage prennent appui sur une zone d'appui prévue à cette effet dans le véhicule.

La zone d'appui peut notamment être formée par des supports latéraux définissant une surface latérale d'appui de ces extrémités ou par des rails de guidage dans lesquels ces extrémités coulissent.

Préférentiellement, les extrémités sont ainsi guidées et/ou maintenues lors du déploiement et du repliement de ladite toile par la zone d'appui.

Le support de la ou des traverses et/ou de la barre de tirage par une zone d'appui permet d'assurer un meilleur maintien de la toile d'occultation en position déployée.

Avantageusement, au moins un élément coulissant et/ou roulant, tel qu'un patin ou une roulette par exemple est solidaire desdites extrémités de façon que les frottements, dus à la progression des extrémités au niveau de la zone d'appui au cours des opérations de déploiement et de repliement, soient réduits au maximum.

En outre, la présence d'au moins une traverse de renfort permet un déploiement et/ou un repliement plus aisé de la toile d'occultation en assurant notamment que la barre de tirage sur laquelle agissent les moyens d'actionnement reste parallèle au tube d'enroulement au cours de ces opérations.

De façon préférée, le tube d'enroulement et les moyens d'actionnement, et le cas échéant un second tube d'enroulement de la seconde toile et/ou la ou les traverses, sont logés dans un boîtier dont la barre de tirage forme au moins une partie d'un couvercle.

Ainsi, lorsque le dispositif est en position repliée, le boîtier ou cassette de rangement permet de le protéger et d'améliorer l'aspect esthétique.

Avantageusement le boîtier pourra être amovible de façon que l'utilisateur puisse l'enlever aisément lorsqu'il souhaite utiliser l'espace de chargement au maximum sans risquer d'endommager le dispositif ou lorsqu'il souhaite augmenter l'espace de chargement en rabattant une partie ou la totalité de la banquette arrière.

Il est également possible d'envisager que l'ensemble du dispositif replié s'escamote dans la banquette arrière.

De façon avantageuse, le dispositif cache-bagages comprend des moyens de motorisation agissant sur les moyens d'actionnement et/ou sur le tube d'enroulement.

Ces moyens de motorisation pourront également permettrent le blocage de la toile d'occultation en position déployée.

Selon une première, les moyens d'actionnement comprennent deux leviers montés en rotation sur ledit bâti.

Ces leviers pourront être symétriques et de façon avantageuse être chacun formés de deux biellettes articulées, définissant un compas. Dans la position repliée, chacun des compas défini un angle proche de 0°.

Selon un premier mode de réalisation, dans la position totalement déployée, chacun des compas définit un angle de 180° où légèrement inférieur à cette valeur, chacun des deux leviers s'étendant alors de façon sensiblement rectiligne.

Selon un second mode de réalisation, chacun des compas forme dans la position totalement déployée un angle de l'ordre de 120° à 160°. Chacun des leviers est alors partiellement plié, ce qui permet d'assurer un meilleur maintien de la toile d'occultation dans cette position.

Selon une autre variante, les moyens d'actionnement montés pivotants sur le bâti peuvent être non articulés et droits (des leviers simples) ou au contraire être articulés et comprendre des croisillons ou un pantographe.

De façon avantageuse, lorsque les moyens d'actionnement sont articulés, formés par exemple de deux biellettes ou de croisillons ou d'un pantographe, au moins une des traverses pourra être solidaire des articulations des moyens d'actionnement ou de certaines de leurs articulations, celles-ci pouvant coulisser par rapport à ladite traverse.

De façon préférée, une traverse de renfort sera alors solidaire de deux articulations situées dans un même plan vertical et parallèle au tube d'enroulement.

La ou les traverses de renfort pourront par exemple présenter une lumière dans laquelle les articulations pourront coulisser au cours des opérations de déploiement et de repliement.
L'invention telle que présentée concerne également tout véhicule automobile comprenant un tel cache-bagages.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- les figures 1A et 1B illustrent, de façon schématique, un dispositif cache-bagages selon l'invention, respectivement en position déployée et en position repliée ;
- la figure 2 illustre un dispositif cache-bagages selon l'invention selon un mode de réalisation mettant en oeuvre une traverse de renfort ;
- la figure 3 présente une coupe transversale dans la position reployée d'un boîtier de rangement du dispositif cache-bagages.

Le principe général de l'invention repose sur un dispositif cache-bagages pour véhicule automobile à déploiement motorisé ou manuel, mettant en oeuvre deux moyens d'actionnement entraînant la barre de tirage et assurant simultanément une fonction de maintien.

Les moyens d'actionnement définissent ainsi une structure de maintien de la toile d'occultation en position déployée, cette structure de maintien pouvant également comprendre des éléments de renfort, comme cela sera décrit ci-après.

Selon l'invention, les moyens d'actionnement montés pivotants sur le bâti peuvent comprendre deux leviers non articulés, ou au contraire, articulés, tels que des croisillons ou un pantographe par exemple.

Dans la description suivante d'un mode de réalisation particulier mais non limitatif de l'invention, on s'attachera plus précisément au cas de deux leviers formés chacun de deux biellettes articulées définissant un compas.

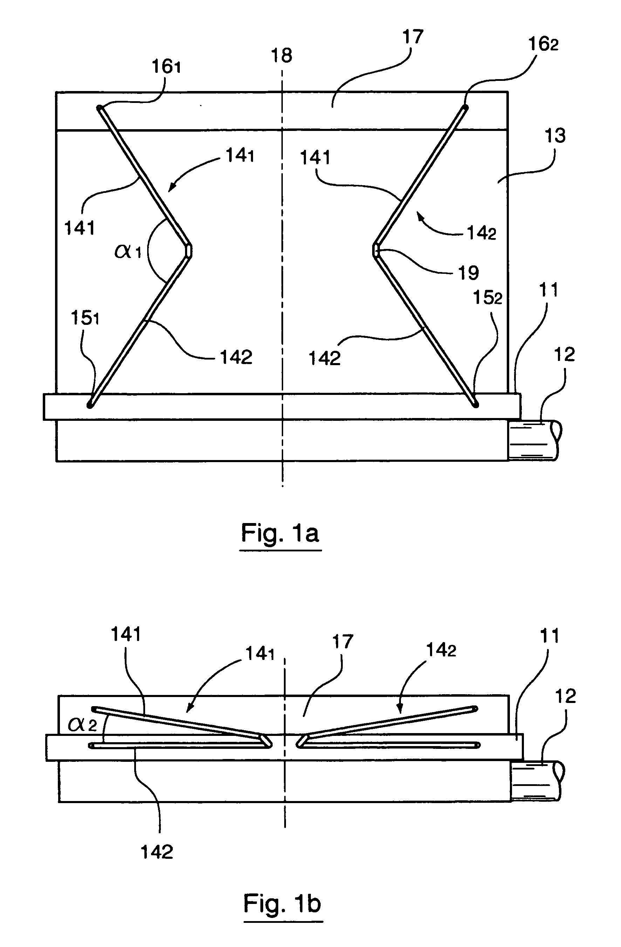

On présente, en relation avec les figures 1A et 1B, un exemple de cache-bagages selon l'invention, respectivement en position déployée, ou quasi-déployée, et en position repliée. Des références numériques identiques désignent les mêmes éléments sur les figures 1A, 1B, 2 et 3.

Ce cache-bagages est destiné à occulter le contenu de l'espace défini généralement par le dossier de la banquette arrière du véhicule, les bords latéraux du véhicule et le hayon ou la portière en position fermée.

Il présente classiquement un bâti 11 qui peut former boîtier et/ou être prévu pour être monté au niveau de la banquette arrière du véhicule, de façon que le rideau s'étende de la banquette arrière vers le hayon ou la portière du véhicule.

Il est cependant également possible d'envisager de fixer le dispositif au niveau du hayon du véhicule.

Un rouleau ou tube d'enroulement 12 est monté en rotation sur ce bâti 11. La (toile ou rideau) d'occultation 13 du dispositif peut être enroulé sur ce tube 12 (position repliée : figure 1B) ou déroulé (position déployée: figure 1A).

Selon ce mode de réalisation, les moyens d'actionnement comprennent deux leviers articulés 14₁ et 14₂, montés pivotants autour d'un axe 15₁, 15₂ sur le bâti 11. Une extrémité 16₁, 16₂ de ces leviers 14₁, 14₂ est solidaire de la barre de tirage 17, qui entraîne l'extrémité libre du rideau 13.

Le dispositif cache-bagages selon l'invention peut être manuel, l'utilisateur actionnant le déploiement ou le repliement du rideau 13 en agissant directement sur la barre de tirage 17. On peut également prévoir que des moyens de motorisation, par exemple électriques, agissent sur les leviers 14₁ et 14₂ de façon symétrique et/ou sur le tube d'enroulement 12.

Par ailleurs, les moyens de motorisation pourront également assurer le blocage des biellettes dans l'état de travail et/ou permettre un déploiement graduel du rideau d'occultation 13.

Le repliement du rideau d'occultation 13 pourra également être assuré en partie par des moyens de rappel agissant sur le tube d'enroulement 12.

Les deux leviers articulés 14₁ et 14₂ sont symétriques par rapport à l'axe 18. Ils sont prévus pour assurer le guidage et/ou le maintien de la barre de tirage 17, dans toutes les positions, et notamment en cours de reploiement et de déploiement. En outre, les leviers 14₁ et 14₂ situés en dessous du rideau d'occultation 13 assurent le maintien de celui-ci en position déployée en définissant une structure de maintien de la toile d'occultation 13.

Ils permettent ainsi à l'utilisateur de poser un objet tel qu'un vêtement sur le rideau d'occultation 13 sans que celui-ci ne s'affaisse.

Lors des opérations de repliement et de déploiement du rideau d'occultation 13, les deux leviers 14₁, 14₂ pivotent autour de leurs axes respectifs 15₁ et 15_{2.}

Selon le mode de réalisation illustré en figure 1A et 1B, les leviers 14₁ et 14₂ sont formés chacun de deux biellettes (ou bras) 141 et 142 articulées en un point central -ou articulation- 19, et définissant un compas. En position repliée (figure 1B), l'angle α₂ entre les deux biellettes 141, 142 est très faible, voire nul, compris entre 0 et 15°, et la barre de tirage 17 vient en contact avec le bâti 11.

Lors du déploiement (figure 1A), l'angle α₁ entre les deux biellettes 141 et 142 s'ouvre, et peut atteindre jusqu'à 180°.

De façon à assurer un maintien homogène du dispositif, il sera possible de prévoir que dans la position complètement déployée, l'angle α₁ entre les deux biellettes 141 et 142 de chacun des leviers 14₁ et 14₂ soit inférieur à 180° de façon à assurer grâce aux leviers 14₁ et 14₂ un maintien du rideau d'occultation 13 réparti de façon optimale sur toute la surface du rideau 13.

Selon cette variante de l'invention, l'angle α₁ pourra par exemple être de l'ordre de 120° en position complètement déployée.

Des systèmes connus assurant un déploiement et un repliement symétrique des leviers articulés, ou de tout autre moyen d'actionnement, pourront être utilisés de façon que la barre de tirage 17 reste en permanence parallèle au tube d'enroulement 12.

Selon le mode de réalisation illustré par les figures 1A et 1B, les biellettes 141 et 142 des leviers sont avantageusement de même longueur. Il est cependant possible d'envisager que les biellettes 141 et 142 soient de longueurs différentes (les deux leviers 14₁ et 14₂ restant symétriques).

D'autres moyens d'actionnement tels que des croisillons ou un pantographe par exemple pourront bien sûr également être envisagés.

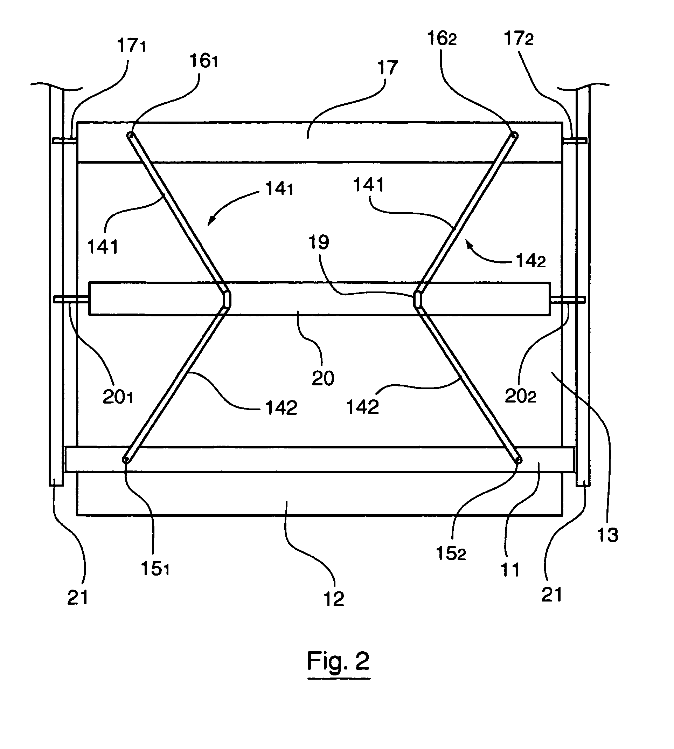

La figure 2 illustre un mode réalisation de l'invention mettant en oeuvre une traverse (ou barre) de renfort 20 portée par les moyens d'actionnement 14₁ et 14₂.

Selon ce mode de réalisation, la traverse de renfort 20 est solidaire des articulations 19, celles-ci pouvant coulisser par rapport à la traverse.

Selon le mode de réalisation de la figure 2, la traverse de renfort 20 présente une lumière (ou fente) dans laquelle les articulations 19 des leviers 14₁ et 14₂ coulissent longitudinalement au cours des opérations de repliement et de déploiement.

La traverse 20 permet, en position déployée, d'améliorer le maintien du rideau d'occultation 13, et permet ainsi le renfort de la structure de maintien de la toile d'occultation en position déployée de sorte à d'augmenter la solidité du dispositif et sa résistance aux chocs éventuels, comme aux vibrations dues au déplacement du véhicule.

De façon avantageuse, la fente de la traverse 20 pourra n'être présente que sur une longueur nécessaire à la course des articulations 19 au cours des opérations de repliement et de déploiements, de façon notamment à assurer un maintien et une solidité optimale de l'ensemble du dispositif en position déployée.

De façon avantageuse, la hauteur de la ou des fentes (si la fente n'est pas continue sur toute la longueur de la barre de renfort) à l'intérieur de la traverse de renfort 20 pourra être aussi faible que possible, de façon à ce qu'elle(s) permette(nt) le coulissement des articulations 19 tout en assurant un maintien optimal de celles-ci dans le plan horizontal défini ci-avant.

La traverse de renfort 20 pourra par exemple être réalisée en aluminium. Ce matériau présentant l'avantage d'être à la fois solide et rigide, tout en étant léger.

Selon un autre mode de réalisation de l'invention, les moyens d'actionnement permettant le déploiement et le maintien du rideau d'occultation pourront par exemple être des croisillons ou un pantographe. Il sera bien sûr également possible dans ce cas de prévoir la présence d'une ou plusieurs traverses de renfort présentant une lumière dans laquelle peuvent coulisser les articulations de tels moyens d'actionnement.

Dans ce cas, chaque barre de renfort pourra relier les articulations des croisillons ou du pantographe situées dans un même plan vertical et parallèle à celui comprenant la barre de tirage. La présence de plusieurs traverses de renfort permet d'augmenter le maintien et la solidité de la structure de maintien de la toile d'occultation dans ladite position déployée, formée par les moyens d'actionnement et la ou les traverses de renfort.

En outre, la présence d'une ou de plusieurs traverses de renfort ne doit pas être limitée au cas où les moyens d'actionnement sont articulés, mais peut également être prévue dans le cas où ceux-ci sont formés par des leviers non articulés.

Tel qu'illustré sur la figure 2, les extrémités 17₁, 17₂ et 20₁, 20₂ de la barre de tirage 17 et/ou de la traverse de renfort 20 se déplacent sur des zones latérales d'appui 21 pouvant être formées par des supports latéraux définissant une surface d'appui ou par des rails de guidage.

Les zones latérales d'appui 21 assurent ainsi le maintien et/ou le guidage des extrémités de la barre de tirage 17 et/ou de la traverse de renfort 20. elles peuvent être montées sur les bords latéraux du véhicule ou directement formées dans la garniture du véhicule

Des éléments coulissants et/ou roulants facilitant le déplacement au niveau des zones latérales d'appui 21 peuvent équiper les extrémités respectivement 17₁, 17₂ et/ou 20₁, 20₂ de la barre de tirage 17 et/ou de la traverse de renfort 20, mais cela n'est toutefois pas obligatoire.

Il pourra en effet être envisagé que les extrémités de certaines ou de toutes les barres transversales telles que la barre de tirage 17 et la ou les (lorsqu'il y en a plusieurs) traverses de renfort 20 soit directement guidées et/ou maintenues par les zones latérales d'appui 21.

Le déplacement des éléments équipant les extrémités 17₁, 17₂ et/ou 20₁, 20₂ sur les supports latéraux ou dans les rails latéraux 21 assure un repliement et un déploiement plus aisé des leviers articulés ou plus généralement d'autres moyens d'actionnement, et permet ainsi également de réduire la force nécessaire à ces opérations, tout en assurant un meilleur maintien du rideau d'occultation 13 en position déployée.

Les éléments de coulissement et/ou de guidage pouvant équiper les extrémités de barres transversales pourront par exemple comprendre des patins ou des roulettes au contact des zones d'appui 21 , de façon à limiter au maximum les frottements dus à leur progression au niveau de celles-ci.

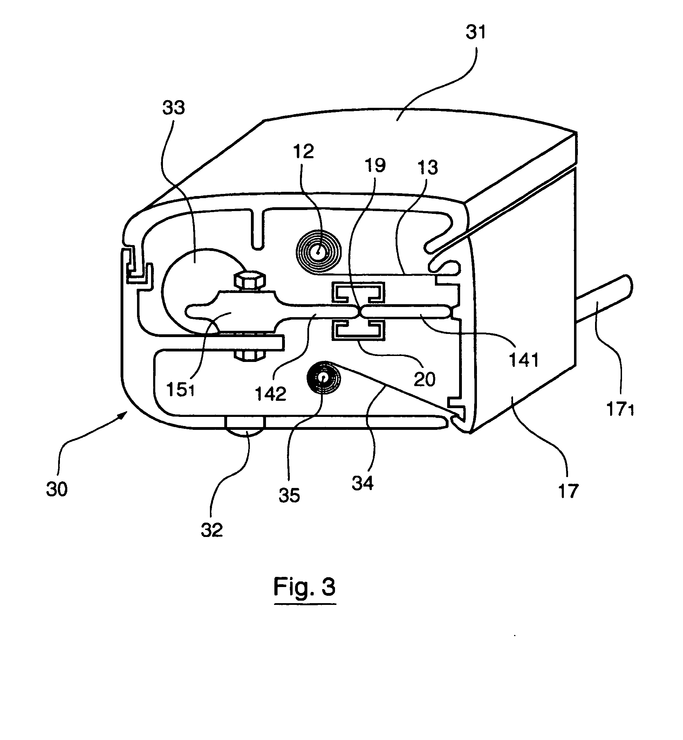

La figure 3 illustre la coupe transversale d'un boîtier ou cassette de rangement 30 de l'ensemble des éléments du dispositif, dans l'état de rangement, lorsque le rideau d'occultation 13 est en position repliée. Cela permet d'une part d'améliorer l'aspect esthétique du dispositif, et d'autre part de protéger celui-ci lorsqu'il est dans l'état de rangement.

De façon préférée, le boîtier est amovible, afin que l'utilisateur puisse l'enlever, par exemple lorsqu'il souhaite rabattre une partie ou l'intégralité de la banquette arrière, de façon qu'il ne gêne pas et qu'il ne soit pas endommagé. Le boîtier permet ainsi à l'utilisateur de saisir le dispositif plus aisément et lui permet en outre de le ranger facilement.

Il sera également possible d'envisager que le boîtier puisse être fixé (par exemple par clipsage) en différents emplacements de la banquette, de façon notamment à pouvoir ne rabattre qu'une partie de celle-ci en laissant le dispositif en place en état de travail.

Lorsque le fonctionnement du dispositif est motorisé, il sera possible de prévoir que les connexions électriques nécessaires au fonctionnement des moyens de motorisation soient réalisées simultanément au clipsage du dispositif.

Il est également possible d'envisager que l'ensemble replié s'escamote dans la banquette.

Le boîtier 30 pourra être réalisé en aluminium peint et présenter un capot de finition 31, en plastique par exemple, empêchant les poussières ou de petits objets pouvant gêner le fonctionnement du dispositif de se nicher à l'intérieur du boîtier 30, ainsi que pour permettre son ouverture lors d'éventuelles réparations ultérieures ainsi qu'un bouchon de finition 32.

La barre de tirage 17 forme, tel qu'illustré sur la figure 3, le couvercle du boîtier 30 lorsque le dispositif est en position repliée. Il est bien sûr envisageable que celle-ci ne forme qu'une partie du couvercle du boîtier ou qu'elle soit située à l'intérieur du boîtier lorsque le dispositif est en position repliée.

À l'intérieur du boîtier sont ainsi représentés en coupe transversale le tube d'enroulement 12, pouvant par exemple présenter un diamètre de 18/20 mm ou 12/14 mm et être réalisé en aluminium, et le rideau d'occultation 13 solidaire de la barre de tirage 17.

Sont également illustrées les deux biellettes 141 et 142 d'un des leviers, la biellette 141 étant solidaire de la barre de tirage, et la biellette 142 pivotant autour de son axe 15₁. Les deux biellettes 141 et 142 sont reliées par l'articulation 19 située dans la lumière de la barre de renfort 20.

Un moteur 33 pouvant être un actionneur simple ou double permet d'actionner le déploiement et le repliement des biellettes.

Par ailleurs, selon une variante avantageuse de l'invention, une toile de protection 34 peut également être prévue sous les leviers , ou plus généralement sous tout autre moyen d'actionnement, de façon à protéger ceux-ci, ainsi que l'utilisateur. La toile de protection 34, comme le rideau d'occultation 13, est enroulée autour d'un tube d'enroulement 35 lorsque le rideau 13 est en position repliée, et se déploie simultanément au rideau 13, la toile 34 étant solidaire de la même barre de tirage 17.

Le tube d'enroulement 35 pourra également être réalisé en aluminium et présenter un diamètre de 10/12 mm par exemple.

Un tel boîtier 30 pourra présenter une largeur de 80 à 100 mm et une hauteur de 50 à 60 mm.

Ainsi, l'invention permet de simplifier de façon importante pour le constructeur la fabrication d'un véhicule équipé d'un tel dispositif. En effet, celui-ci a simplement à prévoir la présence zones d'appui sur les bords latéraux du véhicule, telles que des surfaces formant des supports latéraux ou des rails, par exemple.

Les connexions du dispositif pourront être réalisées lors de l'installation du dispositif. Dès lors, ce dispositif étant simple à monter et ne nécessitant pas de réglages particuliers, contrairement aux dispositifs dont le déploiement est assurés par des câbles d'entraînement circulant dans les rails et devant être parfaitement tendus et présenter une progression symétrique, il pourra être vendu comme une option sur le véhicule ou être installé plus tard par l'utilisateur.

Il sera possible d'envisager un cache-bagages selon l'invention pouvant être adapté un espace arrière trapézoïdal, par exemple en prévoyant une toile de forme trapézoïdale similaire et une barre de tirage de longueur égale à la longueur plus faible de l'arrière du hayon. Il sera par exemple possible de prévoir aux extrémités de celle-ci des embouts télescopiques et/ou à ressort, par exemple se déplaçant sur les zones d'appui latérales du véhicule (non parallèles en conséquence) de façon que leur longueur s'adapte au cours de leur progression.

Lorsque des traverses de renfort seront prévues selon ce mode de réalisation particulier, les extrémités de celles-ci pourront également présenter des embouts télescopiques ou à ressort de façon que sa longueur soit variable et puisse s'adapter à la largeur variable du véhicule.

Selon ce mode de réalisation particulier, l'utilisation de leviers articulés présentant deux biellettes de longueurs différentes pourra se révéler avantageuse de façon notamment à assurer un meilleur maintien.

Il est bien sûr possible d'envisager de nombreux autres modes de réalisation, de combiner, supprimer ou ajouter certains aspects d'un mode de réalisation à l'autre.

## Revendications

1. Dispositif cache-bagages pour véhicule automobile, comprenant un tube d'enroulement (12) monté sur un bâti (11), et une première toile d'occultation (13) dont une première extrémité est solidaire dudit tube d'enroulement (12) et une seconde extrémité est solidaire d'une barre de tirage (17),
**caractérisé en ce qu'**il comprend une seconde toile (34), entraînée par ladite barre de tirage (17) et se déployant parallèlement à ladite première toile d'occultation (13) et simultanément à celle-ci,
et des moyens d'actionnement se déployant entre ladite première toile d'occultation (13) et ladite seconde toile (34),
lesdits moyens d'actionnement étant montés pivotants sur ledit bâti (11) et agissant sur ladite barre de tirage (17) de façon à faire passer cette dernière d'une position de rangement, dans laquelle elle est ramenée au voisinage dudit tube d'enroulement (12), à une position déployée, dans laquelle elle assure le déploiement de ladite toile d'occultation (13), et inversement,
et définissant, dans ladite position déployée, au moins une partie d'une structure de maintien desdites toiles d'occultation (13, 34) dans un plan sensiblement horizontal.

2. Dispositif cache-bagages selon la revendication 1, **caractérisé en ce que** lesdits moyens d'actionnement portent au moins une traverse de renfort (20) de ladite structure de maintien.

3. Dispositif cache-bagages selon la revendication 2, **caractérisé en ce que** ladite ou lesdites traverses (20) sont parallèles à l'axe dudit tube d'enroulement (12), et déplacées par lesdits moyens d'actionnement lors du déploiement ou du repliement de ladite première toile d'occultation (13).

4. Dispositif cache-bagages selon l'une quelconque des revendications 2 et 3, **caractérisé en ce que** les extrémités de la ou desdites traverses (20₁, 20₂) et/ou de ladite barre de tirage (17₁, 17₂) prennent appui sur une zone d'appui (21) prévue à cet effet dans le véhicule.

5. Dispositif cache-bagages selon la revendication 4, **caractérisé en ce que** lesdites extrémités (20₁, 20₂, 17₁, 17₂) sont guidées et/ou maintenues lors du déploiement et du repliement desdites toiles par ladite zone d'appui (21).

6. Dispositif cache-bagages selon la revendication 5, **caractérisé en ce que** qu'au moins un élément coulissant et/ou roulant est solidaire desdites extrémités (20₁, 20₂, 17₁, 17₂).

7. Dispositif cache-bagages selon l'une quelconque des revendications 1 à 6, **caractérisé en ce que** ledit tube d'enroulement (12) et lesdits moyens d'actionnement, et le cas échéant un second tube d'enroulement (35) de ladite seconde toile (34) et/ou la ou lesdites traverses (20), sont logés dans un boîtier (30) dont ladite barre de tirage (17) forme au moins une partie d'un couvercle.

8. Dispositif cache-bagages selon l'une quelconque des revendications 1 à 7, **caractérisé en ce qu'**il comprend des moyens de motorisation (33) agissant sur lesdits moyens d'actionnement et/ou sur ledit tube d'enroulement (12).

9. Dispositif cache-bagages selon la revendication 8, **caractérisé en ce que** lesdits moyens de motorisation (33) permettent le blocage de ladite première toile (13) d'occultation en position déployée.

10. Dispositif cache-bagages selon l'une quelconque des revendications 1 à 9, **caractérisé en ce que** lesdits moyens d'actionnement comprennent deux leviers (14₁, 14₂) montés en rotation sur ledit bâti (11).

11. Dispositif cache-bagages selon la revendication 10, **caractérisé en ce que** chacun desdits leviers (14₁, 14₂) est formé de deux biellettes (141, 142) articulées, définissant un compas.

12. Dispositif cache-bagages selon la revendication 11, **caractérisé en ce que**, dans ladite position déployée, chacun desdits compas définit un angle de l'ordre de 120 à 160°.

13. Dispositif cache-bagages selon l'une quelconque des revendications 1 à 12, **caractérisé en ce que** lesdits moyens d'actionnement comprennent des croisillons ou un pantographe.

14. Dispositif cache-bagages selon la revendication 2 et l'une quelconque des revendications 11 à 13, **caractérisé en ce qu'**au moins une desdites traverses (20) est solidaire des articulations (19) dudit compas ou de deux articulations desdits croisillons ou dudit pantographe, lesdites articulations (19) pouvant coulisser par rapport à ladite traverse (20).

15. Véhicule automobile **caractérisé en ce qu'**il comprend un dispositif cache-bagages selon l'une quelconque des revendications 1 à 14.

## Claims

1. Luggage-concealing device for a motor vehicle, comprising a winding tube (12) which is fitted on a frame (11), and a first screening canvas (13), a first end of which is integral with the said winding tube (12) and a second end of which is integral with a draw bar (17), **characterised in that** it comprises a second cloth (34) which is entrained by the said draw bar (17), and is unfurled parallel to the said first screening cloth (13) and simultaneously with the latter, and actuating means which are deployed between the said first screening canvas (13) and the said second cloth (34), the said actuating means being fitted such as to pivot on the said frame (11) and acting on the said draw bar (17) such as to make the latter go from a storage position, in which it is brought into the vicinity of the said winding tube (12), to a deployed position, in which it assures the unfurling of the said screening canvas (13), and conversely, and defining in the said deployed position at least part of a structure for upholding the said screening canvas (13, 34) on a substantially horizontal plane.

2. Luggage-concealing device according to claim 1, **characterised in that** the said actuating means support at least one reinforcement cross-member (20) for the said support structure.

3. Luggage-concealing device according to claim 2, **characterised in that** the said cross-member(s) (20) is/are parallel to the axis of the said winding tube (12), and are displaced by the said actuating means during the unfurling or furling of the said first screening canvas (13).

4. Luggage-concealing device according to claim 2 or claim 3, **characterised in that** the ends of the said cross-member (s) (20₁, 20₂) and/or of the said draw bar (17₁, 17₂) are supported on a support area (21) which is provided for this purpose in the vehicle.

5. Luggage-concealing device according to claim 4, **characterised in that** the said ends (20₁, 20₂, 17₁, 17₂) are guided and/or maintained by the said support area (21) during the unfurling and furling of the said canvas.

6. Luggage-concealing device according to claim 5, **characterised in that** at least one sliding and/or rolling element is integral with the said ends (20₁, 20₂, 17₁, 17₂).

7. Luggage-concealing device according to any one of claims 1 to 6, **characterised in that** the said winding tube (12) and the said actuating means, and if applicable a second winding tube (35) of the said second canvas (34) and/or the said cross-member(s) (20) are accommodated in a housing (30), the said draw bar (17) of which forms at least part of a cover.

8. Luggage-concealing device according to any one of claims 1 to 7, **characterised in that** it comprises drive means (33) which act on the said actuating means and/or on the said winding tube (12).

9. Luggage-concealing device according to claim 8, **characterised in that** the said drive means (33) permit locking of the said first screening canvas (13) in the unfurled position.

10. Luggage-concealing device according to any one of claims 1 to 9, **characterised in that** the said actuating means comprise two levers (14₁, 14₂) which are fitted such as to rotate on the said frame (11).

11. Luggage-concealing device according to claim 10, **characterised in that** each of the said levers (14₁, 14₂) is formed by two articulated connecting rods (141, 142) which form compasses.

12. Luggage-concealing device according to claim 11, **characterised in that**, in the said deployed position, each of the said compasses defines an angle of approximately 120 to 160°.

13. Luggage-concealing device according to any one of claims 1 to 12, **characterised in that** the said actuating means comprise cross-pieces or a pantograph.

14. Luggage-concealing device according to claim 2 and any one of claims 11 to 13, **characterised in that** at least one of the said cross-members (20) is integral with the articulations (19) of the said compasses or with two articulations of the said cross-pieces or of the said pantograph, the said articulations (19) being able to slide relative to the said cross-member (20).

15. Motor vehicle, **characterised in that** it comprises a luggage concealing device according to any one of claims 1 to 14.

## Patentansprüche

1. Gepäckraumabdeckvorrichtung für Personenkraftwagen, mit einer Rohrwelle (12), die an einem Gestell (11) montiert ist, und einer ersten Abdeckbahn (13), deren erstes Ende fest mit der vorgenannten Rohrwelle (12) verbunden ist und deren zweites Ende fest mit einer Zugstrebe (17) verbunden ist,
**dadurch gekennzeichnet, dass** sie eine zweite Bahn (34), die von der vorgenannten Zugstrebe (17) mitgenommen und parallel zur ersten Abdeckbahn (13) und simultan zu dieser aufgezogen wird,
und Betätigungsmittel umfasst, die zwischen der vorgenannten ersten Abdeckbahn (13) und der vorgenannten zweiten Bahn (34) ausgezogen werden,
wobei die Betätigungsmittel am vorgenannten Gestell (11) schwenkbar montiert sind und auf die vorgenannte Zugstrebe (17) wirken, so dass letztere aus einer eingezogenen Position, in der sie in die Nähe der vorgenannten Rohrwelle (12) gebracht wird, in eine ausgezogene Position geführt wird, in der sie den Auszug der vorgenannten Abdeckbahn (13) gewährleistet, und umgekehrt,
und in der vorgenannten ausgezogenen Position mindestens teilweise eine Stützstruktur für die vorgenannten Abdeckbahnen (13, 34) auf einer ausgeprägt waagerechten Ebene bilden.

2. Gepäckraumabdeckvorrichtung gemäß Anspruch 1,
**dadurch gekennzeichnet, dass** die vorgenannten Betätigungsmittel mindestens eine Verstärkungstraverse (20) der vorgenannten Stützstruktur tragen.

3. Gepäckraumabdeckvorrichtung gemäß Anspruch 2,
**dadurch gekennzeichnet, dass** sich die vorgenannte Traverse oder die vorgenannten Traversen (20) parallel zur Achse der vorgenannten Rohrwelle (12) befindet oder befinden und durch die vorgenannten Betätigungsmittel während des Auszugs oder Einzugs der vorgenannten ersten Abdeckbahn (13) verschoben wird oder werden.

4. Gepäckraumabdeckvorrichtung gemäß einem der Ansprüche 2 und 3,
**dadurch gekennzeichnet, dass** die Enden der vorgenannten Traverse oder Traversen (20₁, 20₂) und/oder der vorgenannten Zugstrebe (17₁, 17₂) in einem hierfür vorgesehenen Auflagebereich (21) im Fahrzeug aufliegen.

5. Gepäckraumabdeckvorrichtung gemäß Anspruch 4,
**dadurch gekennzeichnet, dass** die vorgenannten Enden (20₁, 20₂, 17₁, 17₂) vom vorgenannten Auflagebereich (21) während des Auszugs und Einzugs der vorgenannten Bahnen geführt und/oder gehalten werden.

6. Gepäckraumabdeckvorrichtung gemäß Anspruch 5,
**dadurch gekennzeichnet, dass** mindestens ein gleitendes und/oder rollendes Element fest mit den vorgenannten Enden (20₁, 20₂, 17₁, 17₂) verbunden ist.

7. Gepäckraumabdeckvorrichtung gemäß einem der Ansprüche 1 bis 6,
**dadurch gekennzeichnet, dass** die vorgenannte Rohrwelle (12) und die vorgenannten Betätigungsmittel und gegebenenfalls eine zweite Rohrwelle (35) der vorgenannten zweiten Bahn (34) und/oder die vorgenannte oder vorgenannten Traversen (20) in einem Gehäuse (30) untergebracht sind, an dem die vorgenannte Zugstrebe (17) mindestens einen Teil der Abdeckung bildet.

8. Gepäckraumabdeckvorrichtung gemäß einem der Ansprüche 1 bis 7,
**dadurch gekennzeichnet, dass** sie die Motorisierungsmittel (33) umfasst, die auf die vorgenannten Betätigungsmittel und/oder die vorgenannte Rohrwelle (12) wirken.

9. Gepäckraumabdeckvorrichtung gemäß Anspruch 8,
**dadurch gekennzeichnet, dass** die vorgenannten Motorisierungsmittel (33) die Blockierung der vorgenannten ersten Abdeckbahn (13) in ausgezogener Position gestatten.

10. Gepäckraumabdeckvorrichtung gemäß einem der Ansprüche 1 bis 9,
**dadurch gekennzeichnet, dass** die vorgenannten Betätigungsmittel zwei Hebel (14₁, 14₂) umfassen, die drehend am vorgenannten Gestell (11) angebracht sind.

11. Gepäckraumabdeckvorrichtung gemäß Anspruch 10,
**dadurch gekennzeichnet, dass** jeder der vorgenannten Hebel (14₁, 14₂) aus zwei angelenkten Streben (141, 142) bestehen, die einen Zirkel bilden.

12. Gepäckraumabdeckvorrichtung gemäß Anspruch 11,
**dadurch gekennzeichnet, dass** jeder der vorgenannten Zirkel in der vorgenannten ausgezogenen Position einen Winkel von 120 bis 160° bildet.

13. Gepäckraumabdeckvorrichtung gemäß einem der Ansprüche 1 bis 12,
**dadurch gekennzeichnet, dass** die vorgenannten Betätigungsmittel Gelenkkreuze oder einen Pantographen umfassen.

14. Gepäckraumabdeckvorrichtung gemäß Anspruch 2 und einem der Ansprüche 11 bis 13,
**dadurch gekennzeichnet, dass** mindestens eine der vorgenannten Traversen (20) fest mit den Gelenken (19) des vorgenannten Zirkels oder mit zwei Gelenken der vorgenannten Gelenkkreuze oder des vorgenannten Pantographen verbunden ist, wobei die vorgenannten Gelenke (19) im Verhältnis zur vorgenannten Traverse (20) gleiten können.

15. Personenkraftwagen,
**dadurch gekennzeichnet, dass** er eine Gepäckraumabdeckvorrichtung gemäß einem der Ansprüche 1 bis 14 umfasst.
